# FASCICULE DE BREVET EUROPEEN

(11) **EP 3 694 733 B1**
(45) Date de publication et mention de la délivrance du brevet: **24.04.2024**
(21) Numéro de dépôt: 18786773.4
(22) Date de dépôt: 15.10.2018
(51) Int. Cl.: B60G 21/00, B60G 21/05, B62K 5/10

(54) **VÉHICULE À TRAIN ROULANT AMÉLIORÉ**
FAHRZEUG MIT VERBESSERTEM FAHRWERK
VEHICLE WITH IMPROVED SUSPENSION SYSTEM

(30) Priorité: 13.10.2017 FR 1759601
(43) Date de publication de la demande: 19.08.2020
(73) Titulaire: Eccity Motocycles, 06130 Grasse (FR)
(72) Inventeur: CORNILLON, Christophe, 06130 Grasse (FR); PELLEGRIN, Kevin, 06130 Grasse (FR)
(74) Mandataire: Atout PI Laplace
(86) Numéro de dépôt international: PCT/EP2018/078070
(87) Numéro de publication internationale: WO 2019/073078

(56) Documents cités:
- EP-A1- 1 378 427
- EP-A2- 1 346 907
- WO-A2-02/44008
- CN-A- 106 394 761
- DE-U1-202004 017 870
- FR-A1- 2 995 868
- US-A1- 2017 050 693

## Description

L'invention concerne un véhicule destiné à se mouvoir principalement selon une direction longitudinale. L'invention est particulièrement adaptée à un véhicule automobile. L'invention peut aussi être mise en oeuvre dans un véhicule tracté. L'invention s'intéresse à un train supportant deux roues du véhicule, les deux roues étant parallèles entre elles.

Ces dernières années de nombreux scooters comprenant deux roues avant ont été développés. Ces scooters ont un encombrement peu différent de celui des motos, ce qui permet de garantir une fluidité de circulation même en milieu urbain dense. La présence des deux roues avant améliore la stabilité et l'adhérence du scooter. Cependant la présence des deux roues avant complique la réalisation de la direction et alourdit la conduite.

Des scooters à deux roues arrières ont également été développés afin de conserver les avantages des scooters à deux roues avant en matière de stabilité et d'adhérence. Certains scooters anciens à deux roues arrière ne permettent pas l'inclinaison du véhicule et imposent au conducteur de ralentir lors de virages. De plus pour assurer la stabilité de tels véhicules, notamment en virage, il est nécessaire de prévoir un écartement important des roues arrières, ce qui augmente l'encombrement et empêche une conduite semblable à celle d'une moto.

Plus récemment, des scooters inclinables à deux roues arrière ont été développés comme par exemple décrit dans les documents FR 2 995 868 A1 et FR 2 995 869 A1. Chacune des roues arrières est montée sur un bras oscillant. Un amortisseur relie chaque bras oscillant à un balancier monté de manière pivotante par rapport au châssis du scooter. La présence de ce balancier limite l'inclinaison du scooter. En effet, le balancier doit rester sensiblement parallèle à la route et l'inclinaison du scooter est limitée par le déplacement qui ne doit en aucun cas venir en butée contre le châssis du scooter. Pour augmenter le débattement angulaire du scooter, il serait nécessaire d'abaisser le balancier, ce qui conduirait à réduire la longueur des amortisseurs. De tels amortisseurs ne sont pas standards et remplissent plus difficilement leur fonction. En pratique, cette réalisation fonctionne bien lorsque le scooter se déplace en ligne droite ou en suivant des courbes peu marquées. Lorsque la route impose des rayons de courbure plus faible, il est alors nécessaire de réduire fortement la vitesse du scooter pour en limiter l'inclinaison.

D'autres scooters ou moto inclinables sont décrit dans les documents : EP 1 346 907 A2, DE 20 2004 017870 U1, WO 02/44008 A2, CN 106 394 761 A, EP 1 378 427 A1, US 2017/050693 A1. Le document DE 20 2004 017870 U1 divulgue un véhicule selon le préambule de la revendication 1.

L'invention propose de réaliser un scooter inclinable, et plus généralement un véhicule inclinable, permettant une forte inclinaison en virage. A cet effet, l'invention propose de remplacer le balancier décrit dans le document FR 2 995 869 A1 par deux basculeurs indépendants et de modifier le système d'amortissement.

Plus précisément, l'invention a pour objet un véhicule selon les revendications.

L'invention sera mieux comprise et d'autres avantages apparaîtront à la lecture de la description détaillée d'un mode de réalisation donné à titre d'exemple, description illustrée par le dessin joint dans lequel :
la figure 1 représente en perspective une première variante du châssis d'un véhicule conforme à l'invention équipé des deux roues arrières ;
la figure 2 représente en perspective et plus en détail un train roulant arrière du véhicule de la figure 1 ;
la figure 3 représente en perspective le montage de deux basculeurs et d'un amortisseur équipant le véhicule de la figure 1 ;
la figure 4 représente en vue de dessus les deux basculeurs et leur liaison avec le châssis équipant le véhicule de la figure 1 ;
la figure 5 représente un exemple de schéma cinématique du train arrière du véhicule selon la première variante de l'invention ;
la figure 6 représente en perspective une seconde variante du châssis d'un véhicule conforme à l'invention,
la figure 7 représente un exemple de schéma cinématique du train arrière du véhicule selon la seconde variante de l'invention.

Par souci de clarté, les mêmes éléments porteront les mêmes repères dans les différentes figures.

La description détaillée de l'invention est faite en rapport avec le train arrière d'un scooter. Il est bien entendu que l'invention peut être mise en oeuvre dans d'autres types de véhicule, automobile ou non, comme par exemple un vélo, dès lors que l'on souhaite obtenir une grande indépendance de deux roues d'un même train roulant.

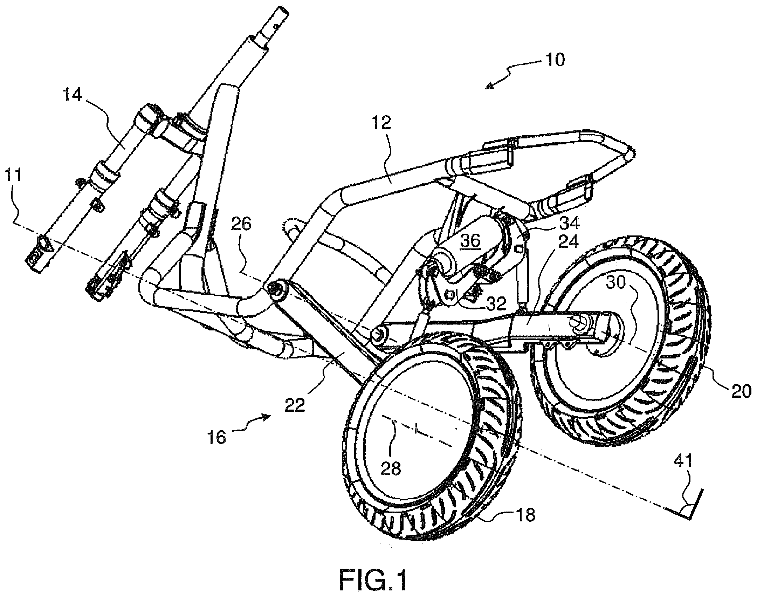

La figure 1 représente une première variante d'un scooter 10 destiné à se mouvoir principalement selon une direction dite longitudinale 11. Cette direction correspond à une trajectoire rectiligne du scooter 10. Il est bien entendu que le scooter peut suivre des trajectoires courbes pour suivre des virages de la route ou pour changer de direction. Pour ne pas surcharger la figure, certains éléments du scooter tels que la roue avant, le guidon, la selle ne sont pas représentés sur de la figure 1. Le scooter 10 comprend un châssis 12 sur lequel sont articulés une fourche avant 14 et un train roulant arrière 16 supportant deux roues arrières 18 et 20. Le train 16 comprend deux bras oscillants 22 et 24 indépendant l'un de l'autre. Chacun des bras oscillants 22 et 24 est mobile en rotation par rapport au châssis 12 autour d'un axe transversal perpendiculaire à la direction longitudinale 11. Pour faciliter la réalisation du scooter 10, les axes de rotation des deux bras oscillants 22 et 24 sont confondus et portent le repère 26. La roue 18 tourne autour de son axe 28 par rapport au bras oscillant 22 et la roue 20 tourne autour de son axe 30 par rapport au bras oscillant 24. Les axes de rotations 26, 28 et 30 sont parallèles entre eux. Pour le bras oscillant 22, l'axe de rotation 26 est situé à l'une des extrémités du bras et l'axe de rotation 28 à l'autre extrémité du bras. De même pour le bras oscillant 24, l'axe de rotation 26 est situé à une extrémité du bras 24 et l'axe de rotation 30 à l'autre extrémité. Les deux bras oscillants 22 et 24 s'étendent avantageusement de façon symétrique par rapport à la direction longitudinale 11.

Pour un scooter 10 automobile, la rotation des roues 18 et 20 est motorisée. Un moteur central peut être disposé sur le châssis 12 et l'entrainement des roues 18 et 20 peut se faire par exemple par chaine ou par courroie. Alternativement, chaque roue 18 et 20 peut être équipée de son propre moteur.

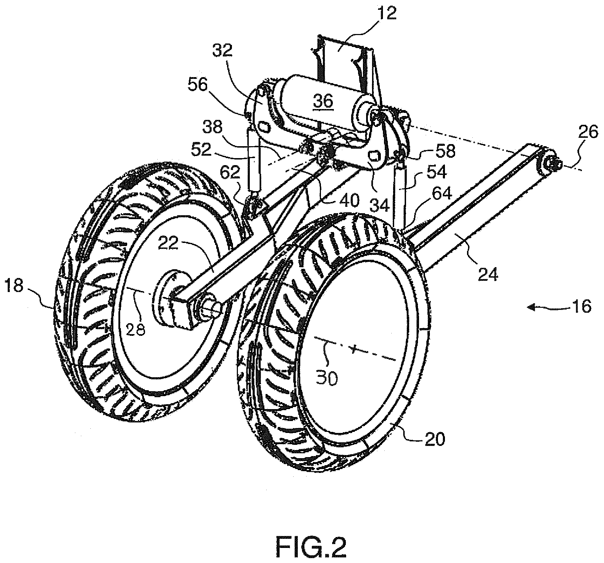

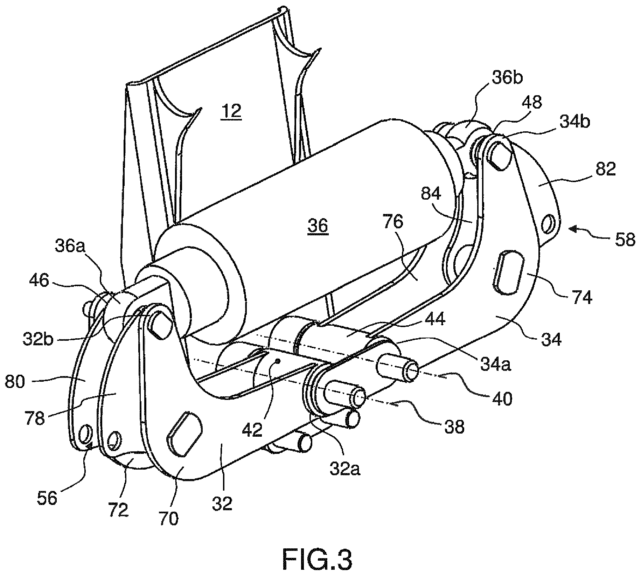

Selon l'invention, le scooter 10 comprend deux basculeurs 32 et 34 et par exemple un amortisseur 36 disposé entre les deux basculeurs 32 et 34. Les figures 2 et 3 illustrent mieux le montage des deux basculeurs 32 et 34 ainsi que celui de l'amortisseur 36. La figure 2 représente en perspective le train arrière 16 et la figure 3 représente, également en perspective et plus en détail, le montage des deux basculeurs 32 et 34 et de l'amortisseur 36 sur le châssis 12.

Les deux basculeurs 32 et 34 sont indépendant l'un de l'autre. Le basculeur 32 est mobile en rotation par rapport au châssis 12 autour d'un axe 38 et le basculeur 34 est mobile en rotation par rapport au châssis 12 autour d'un axe 40. Les deux axes 38 et 40 sont parallèles entre eux. On peut définir un plan 41 du scooter 10 appelé plan vertical. Le plan 41 contient la direction longitudinale 11. Lorsque le scooter 10 se déplace en ligne droite sur une route plate, le plan 41 est vertical. Il est bien entendu que le plan 41 s'incline par rapport à une direction verticale lorsque le scooter 10 suit une courbe. Le plan 41 forme également un plan de symétrie du châssis 12 et de la plupart des équipements du scooter 10. Les deux axes 38 et 40 sont parallèles au plan vertical 41 et disposés de façon symétrique à celui-ci. Une liaison pivot 42 assure la mobilité en rotation du basculeur 32 par rapport au châssis 12 autour de l'axe 38 et une liaison pivot 44 assure la mobilité en rotation du basculeur 34 par rapport au châssis 12 autour de l'axe 40. Les axes de rotation 38 et 40 sont distincts l'un de l'autre. Autrement dit, les liaisons pivots 42 et 44 n'ont pas le même axe.

L'amortisseur 36 est un amortisseur linéaire s'étendant entre deux extrémités 36a et 36b. L'amortisseur 36 comprend par exemple un piston pouvant se déplacer dans une chambre réalisée dans un corps de l'amortisseur 36. Le piston se déplace dans la chambre selon l'axe de l'amortisseur 36, axe passant par les deux extrémités 36a et 36b. L'extrémité 36a appartient au corps de l'amortisseur 36 et l'extrémité 36b appartient à une tige solidaire du piston et s'étendant selon l'axe de l'amortisseur 36. Le piston est percé de façon à permettre le déplacement d'un fluide contenu dans la chambre. Le déplacement du fluide de part et d'autre du piston crée un amortissement du mouvement de l'amortisseur 36 entre ses deux extrémités 36a et 36b. Des ressorts de rappel peuvent être disposés dans la chambre de part et d'autre du piston ou le long de la tige de l'amortisseur 36.

L'amortisseur 36 est par exemple relié au basculeur 32 en son extrémité 36a au moyen d'une liaison pivot 46 et au basculeur 34 en son extrémité 36b au moyen d'une liaison pivot 48.

Un élément de liaison 52 relie le basculeur 32 et le bras oscillant 22. De même, un élément de liaison 54 relie le basculeur 34 et le bras oscillant 24. L'élément de liaison 52 est relié au basculeur 32 à distance de l'axe 38 par exemple au moyen d'une liaison rotule 56. De même, l'élément de liaison 54 est relié au basculeur 34 à distance de l'axe 40 par exemple au moyen d'une liaison rotule 58. L'élément de liaison 52 est relié au bras oscillant 22 à distance de l'axe 26 par exemple au moyen d'une liaison rotule 62. De même, l'élément de liaison 44 est relié au bras oscillant 24 à distance de l'axe 26 par exemple au moyen d'une liaison rotule 64.

Lorsque le scooter 10 roule en ligne droite, et en supposant que la route soit plate, les deux bras oscillants 22 et 24 sont parallèles entre eux et symétriques par rapport au plan 41. Lors d'un virage, le scooter 10 s'incline et l'un des bras oscillant tourne autour de l'axe 26 dans le sens montant tandis que l'autre bras oscillant tourne autour de l'axe 26 dans le sens descendant. Les éléments de liaison 52 et 54 transmettent le mouvement du bras oscillant au basculeur correspondant. Sur route plate, l'amortisseur 36 n'agit pas et conserve une même longueur entre ses extrémités 36a et 36b. L'amortisseur 36 se dilate ou se rétracte entre ses deux extrémités 36a et 36b lorsqu'un seul des bras oscillant 22 ou 24 tourne autour de son axe 26 ou lorsque les deux bras oscillant 22 et 24 tournent dans le même sens, ou de façon plus générale, lorsque les deux bras oscillants 22 et 24 n'ont pas de mouvement inverse, ce qui est le cas par exemple en cas de défaut sur la route ou lorsqu'un utilisateur prend place sur le scooter 10.

Le fait que les axes 38 et 40 soient distincts permet de limiter le déplacement vertical des extrémités de l'amortisseur 36. Cela permet, pour un même espace dédié au déplacement des extrémités de l'amortisseur 36, d'augmenter l'inclinaison du scooter 10.

Les éléments de liaison 52 et 54 peuvent être des biellettes permettant de transmettre directement les mouvements des bras oscillants 22 et 24 vers chacun des deux basculeurs 32 et 34. Alternativement, les éléments de liaison 52 et 54 peuvent être des amortisseurs permettant de filtrer certaines fréquences dans les mouvements des bras oscillants 22 et 24. Il est possible de configurer les amortisseurs 52 et 54 de façon à ce qu'ils filtrent des fréquences différentes de celles filtrées par l'amortisseur 36. Les amortisseurs 52 et 54 sont avantageusement identiques afin s'assurer un même comportement du scooter 10 quel que soit le sens du virage.

Le basculeur 32 s'étend entre deux extrémités 32a et 32b. La liaison pivot 42 est située au niveau de l'extrémité 32a et la liaison pivot 46 est située au niveau de l'extrémité 32b. De même, le basculeur 34 s'étend entre deux extrémités 34a et 34b. La liaison pivot 44 est située au niveau de l'extrémité 34a et la liaison pivot 48 est située au niveau de l'extrémité 34b.

Les basculeurs 32 et 34 peuvent avoir une forme sensiblement rectiligne entre leurs deux extrémités. Cette forme est la plus simple à réaliser. Alternativement, les basculeurs 32 et 34 peuvent avoir une forme courbe entre leurs deux extrémités, l'intérieur de la courbe étant orienté vers l'amortisseur 36. La notion de forme courbe doit être comprise comme n'étant pas rectiligne. On assimile toute forme anguleuse ou arrondie à une forme courbe. Cette forme courbe permet de dégager de l'espace pour y loger l'amortisseur 36. Cet espace dégagé permet de mettre en place un amortisseur 36 plus volumineux que ce qui est possible avec une forme rectiligne du basculeur. De plus l'espace dégagé facilite les mouvements relatifs de l'amortisseur 36 par rapport aux basculeurs 32 et 34.

Les éléments de liaison 52 et 54 sont chacun reliés au basculeur, respectivement 32 et 34, pour transmettre les mouvements des bras oscillants respectivement 22 et 24. Les liaisons entre les éléments de liaison 52 et 54 et les basculeurs 32 et 34 ont au moins deux degrés de liberté en rotation autour d'un axe parallèle à la direction longitudinale 11 et d'un autre axe parallèle à l'axe transversal afin d'éviter tout blocage lors de la rotation des bras oscillants 22 et 24 autour de l'axe 26 et des basculeurs 22 et 24 autour de leur axe respectif 38 ou 40. Comme mentionné plus haut, ces liaisons sont par exemple les liaisons rotule 56 et 58, donc à trois degrés de liberté. Le degré de liberté supplémentaire en rotation est porté par un axe selon lequel l'élément de liaison s'étend entre le basculeur et le bras oscillant correspondants.

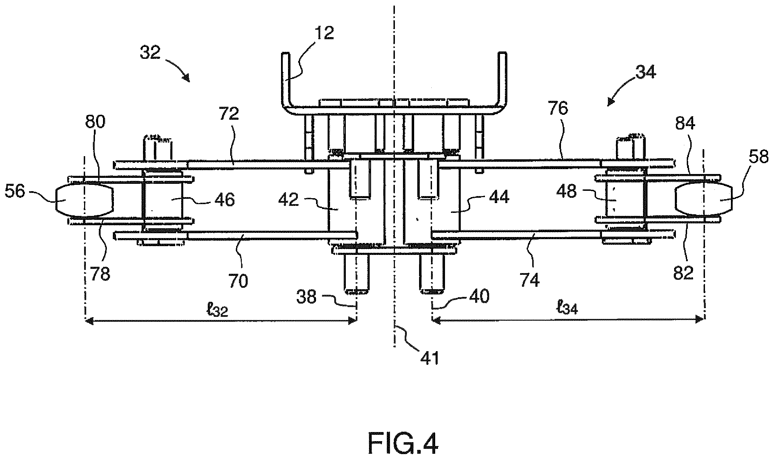

La figure 4 représente en vue de dessus les deux basculeurs 32 et 34 et leur liaison avec le châssis 12. Cette figure est utile pour illustrer les formes des basculeurs 32 et 34. Le centre de rotation des liaisons rotule 56 et 58 est obligatoirement distant des axes de rotation 38 et 40 afin de créer un bras de levier par rapport à l'axe de rotation respectif 38 ou 40. Le bras de levier permettant de faire pivoter le basculeur autour de son axe 38 ou 40 s'étend perpendiculairement à l'axe selon lequel l'élément de liaison s'étend entre le basculeur et le bras oscillant auquel il est associé. Dans l'exemple représenté, les éléments de liaison 52 et 54 sont orientés sensiblement verticalement lorsque le scooter 10 roule ligne droite. Pour simplifier la conception des basculeurs et de leurs liaisons, le centre de rotation des liaisons rotule 56 et 58 peut être sur l'axe de la liaison pivot 46 ou 48 correspondante. Alternativement, il est possible d'augmenter ou de diminuer le bras de levier entre l'axe de rotation 38 ou 40 du basculeur et la liaison avec l'élément de liaison 52 ou 54 en dissociant le centre de rotation des liaisons rotule 56 et 58 de l'axe de la liaison pivot 46 ou 48 correspondante. En considérant que les éléments de liaison 52 et 54 s'étendent perpendiculairement au plan de la figure 4, les bras de levier s'étendent dans le plan de la figure 4. Pour le basculeur 32, le bras de levier de l'effort exercé par l'élément de liaison 52 est noté I₃₂ et pour le basculeur 34, le bras de levier de l'effort exercé par l'élément de liaison 54 est noté l₃₄.

Le bras de levier est alors défini parallèlement à l'axe 26. Une augmentation du bras de levier permet de réduire les mouvements des basculeurs pour un même mouvement des bras oscillants. Autrement dit, en augmentant le bras de levier, il est possible d'augmenter l'inclinaison en virage pour un même espace prévu pour les mouvements des basculeurs 32 et 34 et de l'amortisseur 36. Il est également possible de réduire le bras de levier afin de s'adapter aux besoins cinématique du train arrière.

Conformément à un exemple non revendiqué, ils peuvent être réalisés chacun au moyen d'une pièce mécanique massive par exemple réalisée par usinage ou par forgeage. Alternativement afin de réduire leur masse, il est avantageux de les ajourer. Selon l'invention le basculeur 32 comprend deux plaques parallèles 70 et 72 s'étendant entre les liaisons pivot 42 et 46. De façon symétrique, le basculeur 34 comprend deux plaques parallèles 74 et 76 s'étendant entre les liaisons pivot 44 et 48.

Afin de dissocier, le centre de rotation de la liaison rotule 56 de l'axe de la liaison pivot 46, le basculeur 32 comprend deux plaques parallèles 78 et 80 fixées aux plaques 70 et 72 et permettant d'écarter la liaison rotule 56 de la liaison pivot 46. De même le basculeur 34 comprend deux plaques parallèles 82 et 84 fixées aux plaques 74 et 76 permettant d'écarter la liaison rotule 58 de la liaison pivot 48.

Afin d'éviter que des torsions ne se produisent dans les basculeurs 32 et 34, les liaisons pivot 46 et 48 sont configurées de façon à ce que le point d'application de l'effort exercé par l'amortisseur 36 sur chacun des basculeurs 32 et 34 soit positionné entre les plaques 70 et 72 pour le basculeur 32 et de la même façon entre les plaques 74 et 76 pour le basculeur 34.

De même les liaisons rotule 56 et 58 sont configurées de façon à ce que le point d'application de l'effort exercé par les éléments de liaison 52 et 54 sur chacun des basculeurs 32 et 34 soit positionné entre les plaques 70 et 72 pour le basculeur 32 et de la même façon entre les plaques 74 et 76 pour le basculeur 34. Pour les liaisons rotule, 56 et 58, les plaques 78 et 80 pour le basculeur 32 et les plaques 82 et 84 pour le basculeur 34 servent d'intermédiaire dans la transmission des efforts des liaisons rotules 56 et 58 respectivement vers d'une part les plaques 70 et 72 pour le basculeur 32 et d'autre part les plaques 74 et 76 pour le basculeur 34.

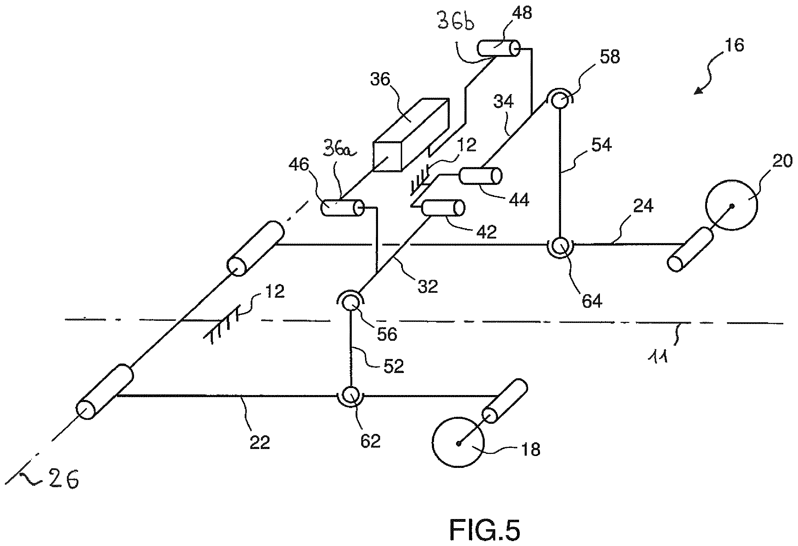

La figure 5 représente un exemple de schéma cinématique d'un train arrière 16 du véhicule 10 selon la première variante. L'amortisseur 36 est représenté sous forme d'une liaison glissière permettant à ses deux extrémités 36a et 36b de se rapprocher par exemple lorsque la route présente une ornière dans laquelle une seule des roues 18 ou 20 peut se trouver. Les deux liaisons pivot 42 et 44 relient directement les basculeurs 32 et 34 au châssis 12. Autrement dit chacun des basculeurs 32 et 34 ne possèdent qu'un seul degré de liberté en rotation par rapport au châssis 12 autour de l'axe de leur liaison pivot respective 42 ou 44.

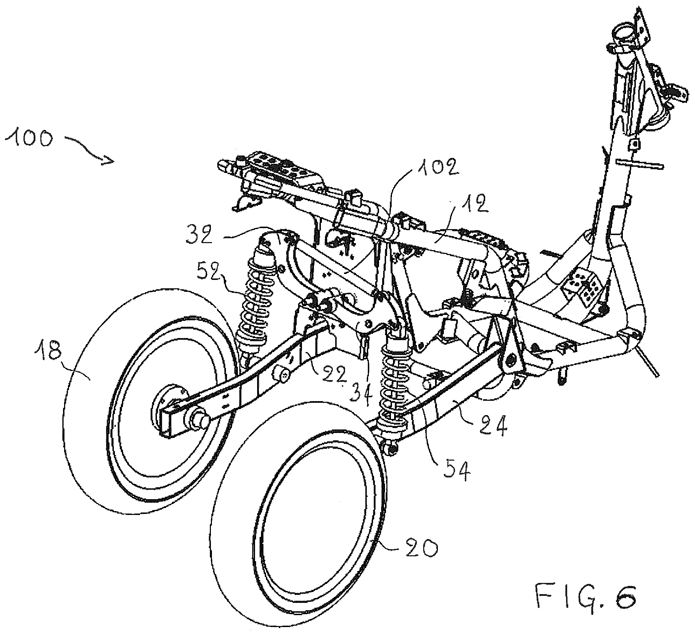

La figure 6 représente une seconde variante d'un scooter 100 selon l'invention. On y retrouve le châssis 12, les deux bras oscillants 22 et 24, les deux basculeurs 32 et 34 ainsi que les deux éléments de liaison 52 et 54. L'amortisseur 36 est ici remplacé par une biellette 102. Les éléments de liaison 52 et 54 sont ici des amortisseurs.

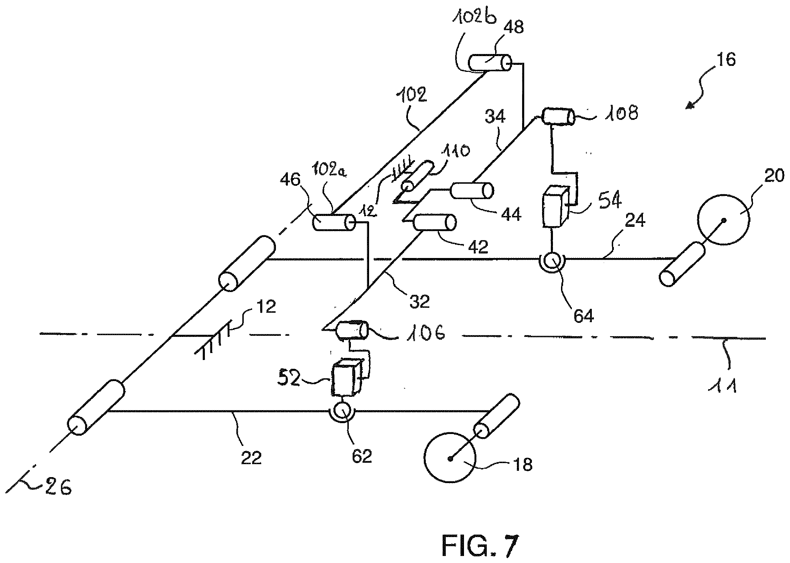

La figure 7 représente un schéma cinématique de la seconde variante. On y trouve donc la biellette 102 reliée à chacune de ses extrémités 102a et 102b à un des basculeurs 32 ou 34 par la liaison pivot, respectivement 46 et 48. Les éléments de liaisons 52 et 54, étant ici des amortisseurs, sont représentés sous forme de liaisons glissière. Des essais en interne ont montré qu'en mettant en oeuvre le schéma cinématique de la figure 5, une rotation peut s'opérer entre le plan des basculeurs et les éléments de liaison 52 et 54. Cette rotation se fait sensiblement autour d'un axe transversal parallèle à l'axe 26 et est encaissée par les liaisons rotule 56 et 58. Cette rotation peut entrainer une déformation des basculeurs 32 et 34 du fait de l'orientation variable des efforts qu'ils encaissent. Les basculeurs 32 et 34 peuvent être dimensionnés pour encaisser ces efforts. Alternativement, le schéma cinématique de la figure 7 permet d'éviter cette rotation. A cet effet, les éléments de liaison 52 et 54 sont reliés à chacun des basculeurs 32 et 34 par une liaison pivot, respectivement 106 et 108. Les deux liaisons pivot 106 et 108 possèdent des axes au repos sensiblement parallèles à la direction longitudinale 11. Lorsque les bras oscillant 22 et 24 pivotent autour de l'axe 26, Il est alors nécessaire de permettre la rotation de l'ensemble formé par les basculeurs 32 et 34 et les éléments de liaison 52 et 54 autour d'un axe parallèle à l'axe 26. A cet effet, une liaison pivot 110 à axe parallèle à l'axe 26 est interposée entre le châssis 12 et les deux liaisons pivot 42 et 44. Les basculeurs 32 et 34 possèdent alors deux degrés de liberté en rotation par rapport au châssis 12, autour des liaisons pivot 42 et 110 pour le basculeur 32 et autour des liaisons pivot 44 et 110 pour le basculeur 34.

Les trois liaisons pivot 106, 108 et 110 peuvent être mise en oeuvre avec l'amortisseur 36, que les éléments de liaison 52 et 54 soient des biellettes ou des amortisseurs.

## Revendications

1. Véhicule destiné à se mouvoir principalement selon une direction longitudinale (11), le véhicule (10) comprenant :
• un châssis (12),
• deux bras oscillants (22, 24) indépendants, chacun des bras oscillants (22, 24) étant mobile en rotation par rapport au châssis (12) autour d'un axe transversal (26) perpendiculaire à la direction longitudinale (11), chacun des bras oscillants (22, 24) portant une roue (18, 20) du véhicule (10),
• deux basculeurs (32, 34) indépendants, chacun étant mobile en rotation par rapport au châssis (12) autour d'un axe (38, 40), les axes de rotation (38, 40) des deux basculeurs (32, 34) étant distincts l'un de l'autre et parallèles entre eux,
• un premier élément de liaison (36 ; 102) disposé entre les deux basculeurs (32, 34),
• deux seconds éléments de liaison (52, 54) reliant chacun un des basculeurs (32, 34) à l'un des bras oscillants (22, 24),
**caractérisé en ce que** chaque basculeur (32, 34), comprend :
• deux premières plaques parallèles (70, 72 ; 74, 76) s'étendant entre la liaison en rotation par rapport au châssis (12) et une liaison avec le premier élément de liaison (36)
• deux secondes plaques parallèles (78, 80 ; 82 ; 84) fixées aux premières plaques (70, 72 ; 74, 76) et permettant d'écarter la liaison (46 ; 48) au premier élément de liaison (36) et la liaison (56, 58) au second élément de liaison (52, 54).

2. Véhicule selon la revendication 1, **caractérisé en ce que** le premier élément de liaison est un amortisseur (36).

3. Véhicule selon la revendication 2, **caractérisé en ce que** les seconds éléments de liaison (52, 54) sont des biellettes, chacune reliée au basculeur (32, 34) respectif et au bras oscillant (22, 24) respectif.

4. Véhicule selon la revendication 2, **caractérisé en ce que** les seconds éléments de liaison (52, 54) sont des amortisseurs chacun relié au basculeur (32, 34) respectif et au bras oscillant (22, 24) respectif.

5. Véhicule selon la revendication 1, **caractérisé en ce que** le premier élément de liaison est une biellette (102) et **en ce que** les seconds éléments de liaison (52, 54) sont des amortisseurs chacun reliée au basculeur (32, 34) respectif et au bras oscillant (22, 24) respectif.

6. Véhicule selon l'une des revendications précédentes, **caractérisé en ce que** le premier élément de liaison (36 ; 102) est reliée à chacune de ses extrémités (36a, 36b ; 102a, 102b) à un des basculeurs (32, 34) par une liaison pivot (46, 48).

7. Véhicule selon l'une des revendications précédentes, **caractérisé en ce que** les basculeurs (32, 34) ont chacun une forme courbe entre d'une part l'axe (38, 40) de mobilité en rotation par rapport au châssis (12) et d'autre part une liaison (46, 48) avec le premier élément de liaison (36 ; 102), l'intérieur de la courbe étant orientée vers le premier élément de liaison (36 ; 102).

8. Véhicule selon l'une des revendications précédentes, **caractérisé en ce que** pour chaque basculeur (32, 34), une liaison entre le second élément de liaison (52, 54) correspondant et ce basculeur (32, 34) est disposée à distance d'une liaison entre le premier élément de liaison (36) et ce même basculeur (32, 34).

9. Véhicule selon la revendication 8, **caractérisé en ce que** pour chaque basculeur (32, 34), à partir de l'axe (38, 40) de mobilité en rotation par rapport au châssis (12), un bras de levier (l₃₂, l₃₄.) avec le second élément de liaison (52, 54) possède une longueur supérieure à celle du bras de levier existant avec la liaison entre le premier élément de liaison (36) et ce même basculeur (32, 34).

10. Véhicule selon l'une des revendications précédentes, **caractérisé en ce que** les liaisons (46, 48) entre le premier élément de liaison (36 ; 102) et chacun des basculeurs (32, 34) sont configurées de façon à ce que le point d'application d'un effort exercé par le premier élément de liaison (36 ; 102) sur chacun des basculeurs (32, 34) soit positionné entre les premières plaques (70, 72 ; 74, 76) de chacun des basculeurs (32, 34).

11. Véhicule selon l'une des revendications précédentes, **caractérisé en ce que** des liaisons (56, 58) entre les seconds éléments de liaison (52, 54) et chacun des basculeurs (32, 34) sont configurées de façon à ce que le point d'application d'un effort exercé par chacun des seconds éléments de liaison (52, 54) sur chacun des basculeurs (32, 34) soit positionné entre les premières plaques (70, 72 ; 74, 76) de chacun des basculeurs (32, 34).

12. Véhicule selon l'une des revendications précédentes, **caractérisé en ce que** des liaisons (56, 58) entre les seconds éléments de liaison (52, 54) et chacun des basculeurs (32, 34) sont des liaisons rotules et **en ce que** chacun des basculeurs (32, 34) ne possèdent qu'un seul degré de liberté en rotation par rapport au châssis (12).

13. Véhicule selon l'une des revendications 1 à 11, **caractérisé en ce que** la mobilité en rotation des deux basculeurs (32, 34) par rapport au châssis (12) est réalisée par l'intermédiaire d'une liaison pivot (110) d'axe parallèle à l'axe transversal (26) et **en ce que** des liaisons (56, 58) entre les seconds éléments de liaison (52, 54) et chacun des basculeurs (32, 34) sont des liaisons pivot (106, 108) dont les axes au repos sont parallèle à la direction longitudinale (11).

14. Véhicule selon la revendication 13, **caractérisé en ce que** la liaison pivot (110) d'axe parallèle à l'axe transversal (26) est interposée entre le châssis (12) et deux liaisons pivot (42, 44) assurant chacune la mobilité en rotation d'un des basculeurs (32, 34) par rapport au châssis (12).

## Patentansprüche

1. Fahrzeug, das dazu gedacht ist, sich hauptsächlich entlang einer Längsrichtung (11) zu bewegen, wobei das Fahrzeug (10) Folgendes umfasst:
• ein Chassis (12),
• zwei unabhängige Schwenkarme (22, 24), wobei jeder der Schwenkarme (22, 24) in Bezug auf das Chassis (12) um eine Querachse (26) senkrecht zur Längsrichtung (11) drehbar beweglich ist, wobei jeder der Schwenkarme (22, 24) ein Rad (18, 20) des Fahrzeugs (10) trägt,
• zwei unabhängige Kippvorrichtungen (32, 34), von denen jede in Bezug auf das Chassis (12) um eine Achse (38, 40) drehbar beweglich ist, wobei die Drehachsen (38, 40) der beiden Kippvorrichtungen (32, 34) voneinander verschieden und parallel zueinander sind,
• ein erstes Verbindungselement (36; 102), das zwischen den beiden Kippvorrichtungen (32, 34) angeordnet ist,
• zwei zweite Verbindungselemente (52, 54), die jeweils eine der Kippvorrichtungen (32, 34) mit einem der Schwenkarme (22, 24) verbinden,
**dadurch gekennzeichnet, dass** jede Kippvorrichtung (32, 34) Folgendes umfasst:
• zwei erste parallele Platten (70, 72; 74, 76), die sich zwischen der Drehverbindung in Bezug auf das Chassis (12) und einer Verbindung mit dem ersten Verbindungselement (36) erstrecken,
• zwei zweite parallele Platten (78, 80; 82; 84), die an den ersten Platten (70, 72; 74, 76) befestigt sind und es ermöglichen, die Verbindung (46; 48) mit dem ersten Verbindungselement (36) und die Verbindung (56, 58) mit dem zweiten Verbindungselement (52, 54) voneinander zu beabstanden.

2. Fahrzeug nach Anspruch 1, **dadurch gekennzeichnet, dass** das erste Verbindungselement ein Dämpfungsglied (36) ist.

3. Fahrzeug nach Anspruch 2, **dadurch gekennzeichnet, dass** die zweiten Verbindungselemente (52, 54) Druckstangen sind, wobei jede mit der jeweiligen Kippvorrichtung (32, 34) und dem jeweiligen Schwenkarm (22, 24) verbunden ist.

4. Fahrzeug nach Anspruch 2, **dadurch gekennzeichnet, dass** die zweiten Verbindungselemente (52, 54) Dämpfungsglieder sind, die jeweils mit der jeweiligen Kippvorrichtung (32, 34) und dem jeweiligen Schwenkarm (22, 24) verbunden sind.

5. Fahrzeug nach Anspruch 1, **dadurch gekennzeichnet, dass** das erste Verbindungselement eine Druckstange (102) ist und dass die zweiten Verbindungselemente (52, 54) Dämpfungsglieder sind, die jeweils mit der jeweiligen Kippvorrichtung (32, 34) und dem jeweiligen Schwenkarm (22, 24) verbunden sind.

6. Fahrzeug nach einem der vorhergehenden Ansprüche, **dadurch gekennzeichnet, dass** das erste Verbindungselement (36; 102) an jedem seiner Enden (36a, 36b; 102a, 102b) durch eine Gelenkverbindung (46, 48) mit einer der Kippvorrichtungen (32, 34) verbunden ist.

7. Fahrzeug nach einem der vorhergehenden Ansprüche, **dadurch gekennzeichnet, dass** die Kippvorrichtungen (32, 34) jeweils eine gekrümmte Form zwischen einerseits der Drehbewegungsachse (38, 40) in Bezug auf das Chassis (12) und andererseits einer Verbindung (46, 48) mit dem ersten Verbindungselement (36; 102) aufweisen, wobei das Innere der Krümmung zum ersten Verbindungselement (36; 102) hin ausgerichtet ist.

8. Fahrzeug nach einem der vorhergehenden Ansprüche, **dadurch gekennzeichnet, dass** bei jeder Kippvorrichtung (32, 34) eine Verbindung zwischen dem entsprechenden zweiten Verbindungselement (52, 54) und dieser Kippvorrichtung (32, 34) mit einem Abstand zu einer Verbindung zwischen dem ersten Verbindungselement (36) und dieser Kippvorrichtung (32, 34) angeordnet ist.

9. Fahrzeug nach Anspruch 8, **dadurch gekennzeichnet, dass** bei jeder Kippvorrichtung (32, 34) ausgehend von der Drehbewegungsachse (38, 40) in Bezug auf das Chassis (12) ein Hebelarm (l₃₂, l₃₄) mit dem zweiten Verbindungselement (52, 54) eine Länge aufweist, die länger ist als diejenige des Hebelarms, die bei der Verbindung zwischen dem ersten Verbindungselement (36) und dieser Kippvorrichtung (32, 34) vorliegt.

10. Fahrzeug nach einem der vorhergehenden Ansprüche, **dadurch gekennzeichnet, dass** die Verbindungen (46, 48) zwischen dem ersten Verbindungselement (36; 102) und jeder der Kippvorrichtungen (32, 34) derart konfiguriert sind, dass der Angriffspunkt einer Kraft, die von dem ersten Verbindungselement (36; 102) auf jede der Kippvorrichtungen (32, 34) ausgeübt wird, zwischen den ersten Platten (70, 72; 74, 76) von jeder der Kippvorrichtungen (32, 34) positioniert ist.

11. Fahrzeug nach einem der vorhergehenden Ansprüche, **dadurch gekennzeichnet, dass** die Verbindungen (56, 58) zwischen den zweiten Verbindungselementen (52; 54) und jeder der Kippvorrichtungen (32, 34) derart konfiguriert sind, dass der Angriffspunkt einer Kraft, die von jedem der zweiten Verbindungselemente (52, 54) auf jede der Kippvorrichtungen (32, 34) ausgeübt wird, zwischen den ersten Platten (70, 72; 74, 76) von jeder der Kippvorrichtungen (32, 34) positioniert ist.

12. Fahrzeug nach einem der vorhergehenden Ansprüche, **dadurch gekennzeichnet, dass** Verbindungen (56, 58) zwischen den zweiten Verbindungselementen (52, 54) und jeder der Kippvorrichtungen (32, 34) Kugelgelenkverbindungen sind und dass jede der Kippvorrichtungen (32, 34) nur einen einzigen in Bezug auf das Chassis (12) drehenden Freiheitsgrad besitzt.

13. Fahrzeug nach einem der Ansprüche 1 bis 11, **dadurch gekennzeichnet, dass** die drehbare Beweglichkeit der beiden Kippvorrichtungen (32, 34) in Bezug auf das Chassis (12) mittels einer Gelenkverbindung (110) mit einer Achse, die parallel zur Querachse (26) ist, durchgeführt ist und dass Verbindungen (56, 58) zwischen den zweiten Verbindungselementen (52, 54) und jeder der Kippvorrichtungen (32, 34) Gelenkverbindungen (106, 108) sind, deren Achsen im Ruhezustand parallel zur Längsrichtung (11) sind.

14. Fahrzeug nach Anspruch 13, **dadurch gekennzeichnet, dass** die Gelenkverbindung (110) mit der Achse, die parallel zur Querachse (26) ist, zwischen dem Chassis (12) und zwei Gelenkverbindungen (42, 44) eingeschoben ist, die jeweils die drehbare Beweglichkeit einer der Kippvorrichtungen (32, 34) in Bezug auf das Chassis (12) gewährleisten.

## Claims

1. A vehicle intended to mainly move in a longitudinal direction (11), the vehicle (10) comprising:
• a chassis (12);
• two independent swing arms (22, 24), each of the swing arms (22, 24) being rotationally movable relative to the chassis (12) about a transverse axis (26) perpendicular to the longitudinal direction (11), each of the swing arms (22, 24) supporting a wheel (18, 20) of the vehicle (10),
• two independent rockers (32, 34), each being rotationally movable relative to the chassis (12) about an axis (38, 40), the axes of rotation (38, 40) of the two rockers (32, 34) being distinct from each other and parallel to each other,
• a first link element (36; 102) disposed between the two rockers (32, 34),
• two second link elements (52, 54) each linking one of the rockers (32, 34) to one of the swing arms (22, 24),
**characterised in that** each rocker (32, 34) comprises:
• two first parallel plates (70, 72; 74, 76) extending between the rotational link relative to the chassis (12) and a link with the first link element (36)
• two second parallel plates (78, 80; 82; 84) fixed to the first plates (70, 72; 74, 76) and allowing to space apart the link (46; 48) to the first link element (36) and the link (56, 58) to the second link element (52, 54).

2. The vehicle according to claim 1, **characterised in that** the first link element is a damper (36).

3. The vehicle according to claim 2, **characterised in that** the second link elements (52, 54) are push rods, each linked to the respective rocker (32, 34) and to the respective swing arm (22, 24).

4. The vehicle according to claim 2, **characterised in that** the second link elements (52, 54) are dampers each linked to the respective rocker (32, 34) and to the respective swing arm (22, 24).

5. The vehicle according to claim 1, **characterised in that** the first link element is a push rod (102) and **in that** the second link elements (52, 54) are dampers each linked to the respective rocker (32, 34) and to the respective swing arm (22, 24).

6. The vehicle according to any of the preceding claims, **characterised in that** the first link element (36; 102) is linked at each of its ends (36a, 36b; 102a, 102b) to one of the rockers (32, 34) by a pivot link (46, 48).

7. The vehicle according to any of the preceding claims, **characterised in that** the rockers (32, 34) each have a curved shape between, on the one hand, the axis (38, 40) for rotational mobility relative to the chassis (12) and, on the other hand, a link (46, 48) with the first link element (36; 102), with the inside of the curve being oriented towards the first link element (36; 102).

8. The vehicle according to any of the preceding claims, **characterised in that**, for each rocker (32, 34), a link between the corresponding second link element (52, 54) and this rocker (32, 34) is disposed at a distance from a link between the first link element (36) and that same rocker (32, 34).

9. The vehicle according to claim 8, **characterised in that**, for each rocker (32, 34), from the axis (38, 40) for rotational mobility relative to the chassis (12), a lever arm (l₃₂, l₃₄) with the second link element (52, 54) has a length that is greater than that of the lever arm that exists with the link between the first link element (36) and that same rocker (32, 34).

10. The vehicle according to any of the preceding claims, **characterised in that** the links (46, 48) between the first link element (36; 102) and each of the rockers (32, 34) are configured so that the point of application of a force exerted by the first link element (36; 102) on each of the rockers (32, 34) is positioned between the first plates (70, 72; 74, 76) of each of the rockers (32, 34).

11. The vehicle according to any of the preceding claims, **characterised in that** links (56, 58) between the second link elements (52, 54) and each of the rockers (32, 34) are configured so that the point of application of a force exerted by each of the second link elements (52, 54) on each of the rockers (32, 34) is positioned between the first plates (70, 72; 74, 76) of each of the rockers (32, 34).

12. The vehicle according to any of the preceding claims, **characterised in that** links (56, 58) between the second link elements (52, 54) and each of the rockers (32, 34) are ball joints and **in that** each of the rockers (32, 34) only has a single degree of rotational freedom relative to the chassis (12).

13. The vehicle according to any of claims 1 to 11, **characterised in that** the rotational mobility of the two rockers (32, 34) relative to the chassis (12) is produced by means of a pivot link (110) with an axis parallel to the transverse axis (26) and **in that** links (56, 58) between the second link elements (52, 54) and each of the rockers (32, 34) are pivot links (106, 108), the resting axes of which are parallel to the longitudinal direction (11).

14. The vehicle according to claim 13, **characterised in that** the pivot link (110) with an axis parallel to the transverse axis (26) is interposed between the chassis (12) and two pivot links (42, 44) each providing the rotational mobility for one of the rockers (32, 34) relative to the chassis (12).
